# EUROPÄISCHE PATENTANMELDUNG

(11) **EP 3 771 545 A1**
(43) Veröffentlichungstag der Anmeldung: **03.02.2021**
(21) Anmeldenummer: 20175012.2
(22) Anmeldetag: 15.05.2020
(51) Int. Cl.: B29C 45/17, B29C 45/76

(54) **VERFAHREN ZUM BETRIEB, INSBESONDERE ZUR EINRICHTUNG, INSTANDSETZUNG UND/ODER WARTUNG, EINER SPRITZGIESSMASCHINE, SPRITZGIESSMASCHINE, COMPUTERPROGRAMM UND COMPUTERLESBARES MEDIUM**

(30) Priorität: 31.07.2019 DE 102019120686
(71) Anmelder: Zahoransky Automation & Molds GmbH, 79108 Freiburg (DE)
(72) Erfinder: Ebner, Winfried, 79312 Emmendingen (DE); Schulz, Jürgen, 79111 Freiburg (DE); Henninger, Frank, 77955 Ettenheim (DE)
(74) Vertreter: Mertzlufft-Paufler, Cornelius

(57) **Zusammenfassung**

Eine Spritzgießmaschine (1) mit ihrer zumindest einen Funktionseinheit (2), wobei die Spritzgießmaschine (1) umfasst wenigstens ein augmented-reality-Darstellungsgerät (3), das die Bedienung, den Betrieb, die Einrichtung, die Instandsetzung und/oder Wartung der Spritzgießmaschine (1) vereinfacht.

## Beschreibung

Die Erfindung betrifft ein Verfahren zum Betrieb, insbesondere zur Einrichtung, Instandsetzung und/oder Wartung, einer Spritzgießmaschine sowie eine Spritzgießmaschine, ein Computerprogramm und ein computerlesbares Medium.

Spritzgießmaschinen sind in unterschiedlichen Ausführungsformen aus dem Stand der Technik bekannt.

Aufgabe der Erfindung ist es, ein Verfahren zum Betrieb, insbesondere zur Einrichtung, Instandsetzung und/oder Wartung, einer Spritzgießmaschine sowie eine Spritzgießmaschine bereitzustellen, deren Nutzung für den Anwender der Spritzgießmaschine und des Verfahrens vereinfacht sind.

Zur Lösung dieser Aufgabe wird zunächst ein Verfahren zum Betrieb, insbesondere zur Einrichtung, Instandsetzung und/oder Wartung, einer Spritzgießmaschine vorgeschlagen, das die Merkmale des unabhängigen, auf ein solches Verfahren gerichteten Anspruchs aufweist. So wird zur Lösung der genannten Aufgabe insbesondere vorgeschlagen, dass die Spritzgießmaschine anhand eines maschinenlesbaren Identifikationsmerkmals und/oder zumindest eine der Spritzgießmaschine zuzuordnende und/oder zugeordnete Funktionseinheit anhand eines maschinenlesbaren Identifikationsmerkmals identifiziert wird/werden, wonach zumindest eine Information, die sich auf die identifizierte Spritzgießmaschine und/oder die zumindest eine identifizierte Funktionseinheit bezieht, mit einem augmented-reality-Darstellungsgerät ausgegeben wird, das der Spritzgießmaschine zumindest zeitweise zugeordnet ist.

Die Ausgabe der Information erfolgt vorzugsweise durch Anzeige und damit optisch, kann jedoch auch akustisch erfolgen. Denkbar ist zum Beispiel die Ausgabe von Sprachanweisungen als Information. Auch die Kombination von optisch angezeigten Informationen mit akustischen Informationen, wie beispielsweise Sprachanweisungen ist natürlich möglich.

Je nach Art der Information, die ausgegeben werden soll, ist das augmented-reality-Darstellungsgerät dann mit einem Display und/oder mit einem akustischen Signalgeber, beispielsweise mit einem Lautsprecher ausgestattet.

Das zur Identifikation der Spritzgießmaschine vorgesehene Identifikationsmerkmal kann als erstes Identifikationsmerkmal bezeichnet werden. Das zur Identifikation der zumindest einen Funktionseinheit vorgesehene Identifikationsmerkmal kann als weiteres oder zweites Identifikationsmerkmal bezeichnet werden.

Über das augmented-reality-Darstellungsgerät können einem Anwender der Spritzgießmaschine somit relevante Informationen, die sich auf die Spritzgießmaschine und/oder die zumindest eine Funktionseinheit der Spritzgießmaschine beziehen, angezeigt werden, wodurch sich die Handhabung der Spritzgießmaschine vereinfacht. Die Ausgabe von Informationen bezüglich der Spritzgießmaschine und/oder der zumindest einen Funktionseinheit kann somit dazu verwendet werden, die Bedienung, Einrichtung, Wartung und/oder Wartung der Spritzgießmaschine und/oder der zumindest einen Funktionseinheit anzuleiten und/oder zu vereinfachen.

Dabei kann das augmented-reality-Darstellungsgerät zur Aufnahme und Darstellung eines Bildes der Spritzgießmaschine und/oder der zumindest einen Funktionseinheit der Spritzgießmaschine eingerichtet sein. So ist es möglich, ein Bild der Spritzgießmaschine und/oder der Funktionseinheit aufzunehmen und über das augmented-reality-Darstellungsgerät zusammen mit einer Information auszugeben, die sich auf die Spritzgießmaschine und/oder die Funktionseinheit der Spritzgießmaschine bezieht.

Mithilfe der dem Bild der Spritzgießmaschine und/oder der zumindest einen Funktionseinheit der Spritzgießmaschine überlagerten Information, die dem Anwender zusammen mit dem Bild der Spritzgießmaschine und/oder der Funktionseinheit der Spritzgießmaschine angezeigt wird, können Anweisungen und/oder Hinweise zum Betrieb, insbesondere zur Einrichtung, Instandsetzung und/oder Wartung, der Spritzgießmaschine und/oder der Funktionseinheit der Spritzgießmaschine ausgegeben werden.

Bei einer vorteilhaften Ausführungsform des Verfahrens können das erste Identifikationsmerkmal und/oder das zweite Identifikationsmerkmal von dem augmented-reality-Darstellungsgerät ausgelesen werden, um die Spritzgießmaschine und/oder die zumindest eine Funktionseinheit zu identifizieren.

Bei einer vorteilhaften Ausführungsform des Verfahrens werden Handlungsanweisungen, Informationen und/oder Maßnahmen zum Betrieb, zur Einrichtung, Instandsetzung und/oder Wartung der Spritzgießmaschine und/oder der zumindest einen Funktionseinheit als Information von dem augmented-reality-Darstellungsgerät ausgegeben, insbesondere angezeigt.

Das erste maschinenlesbare Identifikationsmerkmal kann beispielsweise an einem Gestell und/oder Ständer der Spritzgießmaschine angeordnet sein. Das zweite maschinenlesbare Identifikationsmerkmal kann an der Funktionseinheit angeordnet sein. Grundsätzlich ist es aber auch möglich, anhand von geometrischen Informationen sowohl die Spritzgießmaschine als auch die Funktionseinheit zu identifizieren. Dies kann mittels Bilderkennung, insbesondere mittels Bilderkennungssoftware geschehen. So kann das augmented-reality-Darstellungsgerät zur Identifikation der Spritzgießmaschine und/oder der zumindest einen Funktionseinheit mittels Bilderkennung eingerichtet sein kann.

Bei einer Ausführungsform des Verfahrens kann geprüft werden, ob die, vorzugsweise mithilfe des augmented-reality-Darstellungsgeräts, identifizierte Spritzgießmaschine und die zumindest eine identifizierte Funktionseinheit kompatibel zueinander sind. Die Prüfung kann anhand von in einer Datenbank hinterlegten Daten erfolgen. Ein Ergebnis der Prüfung kann über das augmented-reality-Darstellungsgerät als Information für den Anwender ausgegeben werden. Vorteilhaft ist es hierbei, wenn das Ergebnis der vorgenommenen Prüfung einem tatsächlichen Bild der Spritzgießmaschine und/oder der Funktionseinheit überlagert wird.

Bei einer Ausführungsform des Verfahrens können historische Nutzungsdaten der mithilfe des augmented-reality-Darstellungsgeräts identifizierten Funktionseinheit als Information von dem augmented-reality-Darstellungsgerät ausgegeben werden. Ferner ist es möglich historische Nutzungsdaten zu prüfen. Die historischen Nutzungsdaten können aus einer, beispielsweise der bereits zuvor erwähnten Datenbank ausgelesen werden. Die historischen Nutzungsdaten der identifizierten Funktionseinheit können über das augmented-reality-Darstellungsgerät für einen Anwender der Spritzgießmaschine ausgegeben werden. Aus den historischen Nutzungsdaten können die Spritzgießmaschine, insbesondere eine Regeleinheit der Spritzgießmaschine, und/oder auch der Anwender Handlungsanweisungen, Informationen und/oder Maßnahmen zur Einrichtung, Instandsetzung und/oder Wartung der Spritzgießmaschine und/oder der zumindest einen Funktionseinheit ableiten und/oder auslösen.

Bei einer Ausführungsform des Verfahrens werden historische Nutzungsdaten der Funktionseinheit geprüft, insbesondere aus einer, beispielsweise der bereits zuvor erwähnten, Datenbank ausgelesen. Die Prüfung kann mit dem augmented-reality-Darstellungsgerät erfolgen. Zumindest eine Einrichtungsinformation, beispielsweise Einrichtungsparameter und/oder Handlungsanweisungen, die vorherige Einrichtungsvorgänge repräsentiert, kann als Information von dem augmented-reality-Darstellungsgerät ausgegeben werden, wenn eine Prüfung der historischen Nutzungsdaten ergibt, dass die Funktionseinheit oder eine baugleiche Funktionseinheit bereits zuvor mit der Spritzgießmaschine oder einer baugleichen Spritzgießmaschine verwendet wurde. Die Einrichtungsinformationen können aus einer, beispielsweise der zuvor erwähnten Datenbank ausgelesen werden.

Es ist auch möglich, zumindest eine Einrichtungsinformation, wie beispielsweise Einrichtungsparameter und/oder Handlungsanweisungen, einer Ersteinrichtung in der Datenbank zu hinterlegen, wenn eine Prüfung der historischen Nutzungsdaten der Funktionseinheit ergibt, dass die Funktionseinheit oder eine baugleiche Funktionseinheit bisher noch nicht mit der Spritzgießmaschine oder einer baugleichen Spritzgießmaschine verwendet wurde. Auf diese Weise können die bei einer Ersteinrichtung der Funktionseinheit an einer solchen Spritzgießmaschine vorgenommenen Schritte und/oder Maßnahmen als Einrichtungsparameter und/oder Handlungsanweisungen für nachfolgende Inbetriebnahmen derselben Funktionseinheit und/oder einer baugleichen Funktionseinheit an derselben Spritzgießmaschine und/oder an einer baugleichen Spritzgießmaschine zur Verfügung gestellt werden.

Ebenso ist es möglich, erfolgreich durchgeführte Wartungs-, Instandsetzungs- und/oder Betriebsmaßnahmen entsprechend als Wartungsinformation, Instandsetzungsinformation und/oder Betriebsinformation in Form entsprechender Datensätze in einer oder der Datenbank zu hinterlegen. Dabei werden die die entsprechenden Informationen repräsentierenden Daten oder Datensätze vorzugsweise autonom in der Datenbank hinterlegt. Dies kann vorzugsweise autonom und/oder automatisch mit dem augmented-reality-Darstellungsgerät erfolgen.

Es ist auch möglich, insbesondere im Instandsetzungsfall, also dann, wenn die Spritzgießmaschine und/oder die zumindest eine Funktionseinheit ausfällt, anhand des ersten und/oder zweiten Identifikationsmerkmals zumindest eine Instandsetzungsinformation, insbesondere einen Konstruktionsplan, der Spritzgießmaschine und/oder der Funktionseinheit als Information von dem augmented-reality-Darstellungsgerät auszugeben. Die zumindest eine Instandsetzungsinformation kann aus einer, beispielsweise der bereits zuvor erwähnten, Datenbank ausgelesen werden.

Der Anwender kann das augmented-reality-Darstellungsgerät im Instandsetzungsfall also als Hilfsmittel zur vereinfachten, angeleiteten und zielgerichteten Instandsetzung der Spritzgießmaschine und/oder der zumindest einen Funktionseinheit verwenden. Dabei können für die Instandsetzung relevante Informationen einem mit dem augmented-reality-Darstellungsgerät aufgenommenen Bild der Spritzgießmaschine und/oder der zumindest einen Funktionseinheit überlagert werden. So erhält der Anwender eine für ihn besonders intuitiv nutzbare Anleitung zur Instandsetzung und/oder Reparatur der Spritzgießmaschine und/oder der zumindest einen Funktionseinheit.

Zur Instandsetzung der Spritzgießmaschine und/oder der Funktionseinheit vorgenommene Maßnahmen, Handlungen und/oder Parameter können für zukünftige Instandsetzungsfälle bei baugleichen Spritzgießmaschinen und/oder Funktionseinheiten als Instandsetzungsinformation, zum Beispiel in Form von Datensätzen und/oder Handlungsanweisungen in einer, beispielsweise der zuvor erwähnten, Datenbank hinterlegt werden. Dies kann mithilfe des augmented-reality-Darstellungsgeräts erfolgen.

Ferner ist es möglich, ein erforderliches Ersatzteil zumindest mittelbar mithilfe des augmented-reality-Darstellungsgeräts automatisch zu bestellen, wenn an der Spritzgießmaschine und/oder Funktionseinheit ein Defekt festgestellt wurde.

Wenn eine Wartung der Spritzgießmaschine und/oder der Funktionseinheit ansteht, kann auch dies als Information von dem augmented-reality-Darstellungsgerät ausgegeben, insbesondere angezeigt werden. Ferner ist es möglich, für die anstehende Wartung der Spritzgießmaschine und/oder der Funktionseinheit erforderliche Maßnahmen über und/oder mithilfe des augmented-reality-Darstellungsgeräts einzuleiten. Diesbezüglich ist es insbesondere vorstellbar, für die konkrete Wartung erforderliches Material, beispielsweise Verbrauchsmaterial, Ersatzmaterial und/oder Ersatzteile zu bestellen. Diese Bestellung kann zumindest mittelbar autonom von dem augmented-reality-Darstellungsgeräts vorgenommen und/oder ausgelöst werden.

Im Wartungsfall kann anhand des ersten und/oder zweiten Identifikationsmerkmals zumindest eine Wartungsinformation, insbesondere ein Konstruktionsplan, der Spritzgießmaschine und/oder Funktionseinheit als Information von dem augmented-reality-Darstellungsgerät ausgegeben werden. Wie in Bezug auf die zuvor bereits erläuterten Informationen, die über das augmented-reality-Darstellungsgerät ausgegeben werden können, ausgeführt wurde, ist es natürlich auch hier möglich, diese Informationen einem mithilfe des augmented-reality-Darstellungsgeräts aufgenommenen Bild der Spritzgießmaschine und/oder der Funktionseinheit zu überlagern. Die zumindest eine Wartungsinformation kann aus einer, beispielsweise der bereits zuvor erwähnten Datenbank ausgelesen werden.

Das augmented-reality-Darstellungsgerät kann ein Bild der Spritzgießmaschine und/oder der Funktionseinheit aufnehmen und eine Darstellung ausgeben, die dieses Bild durch, insbesondere aus einer oder der Datenbank ausgelesene, Informationen, Daten, Handlungsanweisungen und/oder Parameter ergänzt. Die Informationen, Daten, Handlungsanweisungen und/oder Parameter werden dabei zweckmäßigerweise in Abhängigkeit der identifizierten Spritzgießmaschine und/oder der identifizierten Funktionseinheit ausgegeben. So kann der Anwender durch Ausrichtung des augmented-reality-Darstellungsgeräts auf das jeweilige Bauteil zielgerichtet die Informationen erhalten, die er für den Betrieb, die Instandsetzung, Wartung und/oder Inbetriebnahme benötigt.

Auf diese Weise ist es möglich, dem Anwender des Verfahrens und/oder der Spritzgießmaschine über das augmented-reality-Darstellungsgerät für den Betrieb der Spritzgießmaschine erforderliche Informationen, Daten, Handlungsanweisungen und/oder Parameter auf besonders intuitive Weise zur Verfügung zu stellen.

Die Darstellung, die wie bereits zuvor erwähnt aus einem Bild der Spritzgießmaschine und/oder der Funktionseinheit sowie einer diesem Bild überlagerten Information, insbesondere aus Handlungsanweisungen, Daten und/oder Parametern, bestehen kann, lässt sich im Bedarfsfall an zumindest eine weitere Anzeigevorrichtung übertragen. So ist es möglich, eine Ferneinrichtung, Fernwartung und/oder Ferninstandsetzung der Spritzgießmaschine und/oder der Funktionseinheit durchzuführen.

Die Anzeigevorrichtung kann dabei zumindest zeitweise mit dem augmented-reality-Darstellungsgerät und/oder der Spritzgießmaschine, insbesondere einer Regeleinheit der Spritzgießmaschine, verbunden werden. Die Anzeigevorrichtung kann beispielsweise bei einem Hersteller der Spritzgießmaschine und/oder einem Servicedienstleister genutzt werden, der dann die an der Spritzgießmaschine und/oder der zumindest einen Funktionseinheit erforderlichen Arbeiten aus der Ferne unterstützen kann.

Als erstes Identifikationsmerkmal und/oder als zweites Identifikationsmerkmal können maschinenlesbare Codes, zum Beispiel QR-Codes oder auch Bar-Codes verwendet werden. Derartige Codes lassen sich auf besonders einfache Weise mithilfe des augmented-reality-Darstellungsgeräts zur Identifikation der Spritzgießmaschine und/oder der zumindest einen Funktionseinheit auswerten.

Die Datenbank kann in einem netzwerkbasierten Speicher, insbesondere einer Cloud, realisiert sein. Dies hat den Vorteil, dass auch andere Spritzgießmaschinen und/oder augmented-reality-Darstellungsgeräte auf die Datenbank zur Durchführung des Verfahrens zurückgreifen können.

Die zumindest eine Funktionseinheit kann beispielsweise eine Spritzgießform sein. Als augmented-reality-Darstellungsgerät kann beispielsweise ein Tablet-Computer, ein Smartphone und/oder eine Datenbrille, insbesondere eine AR- und/oder eine VR-Brille verwendet werden. Hierbei steht AR für augmented-reality, während VR für virtual reality steht.

Zur Lösung der Aufgabe wird schließlich auch eine Spritzgießmaschine mit den Merkmalen des unabhängigen, auf eine solche Spritzgießmaschine gerichteten Anspruchs vorgeschlagen. Zur Lösung der Aufgabe wird somit insbesondere eine Spritzgießmaschine mit zumindest einer Funktionseinheit und mit wenigstens einem augmented-reality-Darstellungsgerät vorgeschlagen wobei die Spritzgießmaschine ein, insbesondere erstes, maschinenlesbares Identifikationsmerkmal und/oder die Funktionseinheit ein, insbesondere weiteres oder zweites, maschinenlesbares Identifikationsmerkmal aufweist/aufweisen, und wobei die Spritzgießmaschine zur Durchführung des Verfahrens nach einem der auf das Verfahren gerichteten Ansprüche eingerichtet ist.

Die Spritzgießmaschine und die Funktionseinheit können mit einem ersten bzw. mit einem zweiten Identifikationsmerkmal in Form jeweils eines Codes, zum Beispiel in Form eines Bar-Codes oder eines QR-Codes ausgestattet sein.

Vorzugsweise ist das augmented-reality-Darstellungsgerät dazu eingerichtet, Informationen, die sich auf die Spritzgießmaschine und/oder die zumindest eine Funktionseinheit beziehen, autonom aus einer, beispielsweise der zuvor erwähnten Datenbank auszulesen. Anschließend können diese Informationen von dem augmented-reality-Darstellungsgerät ausgegeben werden.

Ferner kann das augmented-reality-Darstellungsgerät dazu eingerichtet sein, Informationen bezüglich eines erfolgreichen Betriebs, einer erfolgreichen Einrichtung, Instandsetzung und/oder Wartung der Spritzgießmaschine und/oder der zumindest einen Funktionseinheit autonom und/oder automatisch in einer, beispielsweise der zuvor erwähnten Datenbank zu hinterlegen. Das augmented-reality-Darstellungsgerät kann ferner zum Auslesen des ersten Identifikationsmerkmals und/oder des zweiten Identifikationsmerkmals eingerichtet sein. So ist eine Identifikation der Spritzgießmaschine und der Funktionseinheit mit dem augmented-reality-Darstellungsgerät möglich.

Je nach Art der Information, die ausgegeben werden soll, ist das augmented-reality-Darstellungsgerät mit einem Display und/oder mit einem akustischen Signalgeber, beispielsweise mit einem Lautsprecher ausgestattet.

Als Funktionseinheit kann die Spritzgießmaschine beispielsweise eine Spritzgießform aufweisen. Als augmented-reality-Darstellungsgerät kann die Spritzgießmaschine zumindest zeitweise einen Tablet-Computer, ein Smartphone und/oder eine Datenbrille, insbesondere eine AR-Brille und/oder eine VR-Brille umfassen.

Das augmented-reality-Darstellungsgerät kann zumindest eine Kamera und/oder zumindest ein Mikrofon aufweisen. Mithilfe der Kamera und/oder des zumindest einen Mikrofons lassen sich die Spritzgießmaschine und die wenigstens eine Funktionseinheit der Spritzgießmaschine in ihrem aktuellen Zustand wiedergeben. Mithilfe der Kamera können die Spritzgießmaschine und die Funktionseinheit überdies anhand ihrer Identifikationsmerkmale identifiziert werden.

Die Spritzgießmaschine kann zumindest zeitweise eine Datenbank aufweisen und/oder mit einer solchen verbunden sein. Die Datenbank kann beispielsweise in einem netzwerkbasierten Speicher, vorzugsweise einer Cloud hinterlegt sein.

Die Spritzgießmaschine kann zur Ferneinrichtung, Fernwartung oder Ferninstandsetzung der Spritzgießmaschine und/oder der Funktionseinheit zumindest zeitweise eine weitere Anzeigevorrichtung aufweisen. Die weitere Anzeigevorrichtung kann zumindest zeitweise über ein Netzwerk mit einer Regeleinheit der Spritzgießmaschine und/oder dem augmented-reality-Darstellungsgerät verbunden sein. Die Funktionsweise der weiteren Anzeigevorrichtung wurde bereits in Bezug auf das Verfahren näher erläutert.

Zur Lösung der Aufgabe werden ferner ein Computerprogramm nach dem auf ein solches gerichteten unabhängigen Anspruch und ein computerlesbares Medium nach dem auf ein solches gerichteten unabhängigen Anspruch vorgeschlagen.

Als computerlesbares Medium, auf dem das Computerprogramm gespeichert ist, kann ein, beispielsweise der bereits zuvor erwähnte, netzwerkbasierter Speicher, insbesondere eine Cloud verwendet werden.

Nachstehend ist nun ein Ausführungsbeispiel der Erfindung anhand der Zeichnung näher beschrieben. Die Erfindung ist nicht auf das gezeigte Ausführungsbeispiel beschränkt. Weitere Ausführungsbeispiele der Erfindung ergeben sich durch Kombination der Merkmale einzelner oder mehrerer Schutzansprüche untereinander und/oder in Kombination einzelner oder mehrerer Merkmale des Ausführungsbeispiels.

Die einzige Figur zeigt eine stark schematisierte, perspektivische Ansicht einer Spritzgießmaschine, die einen Tablet-Computer als augmented-reality-Darstellungsgerät umfasst.

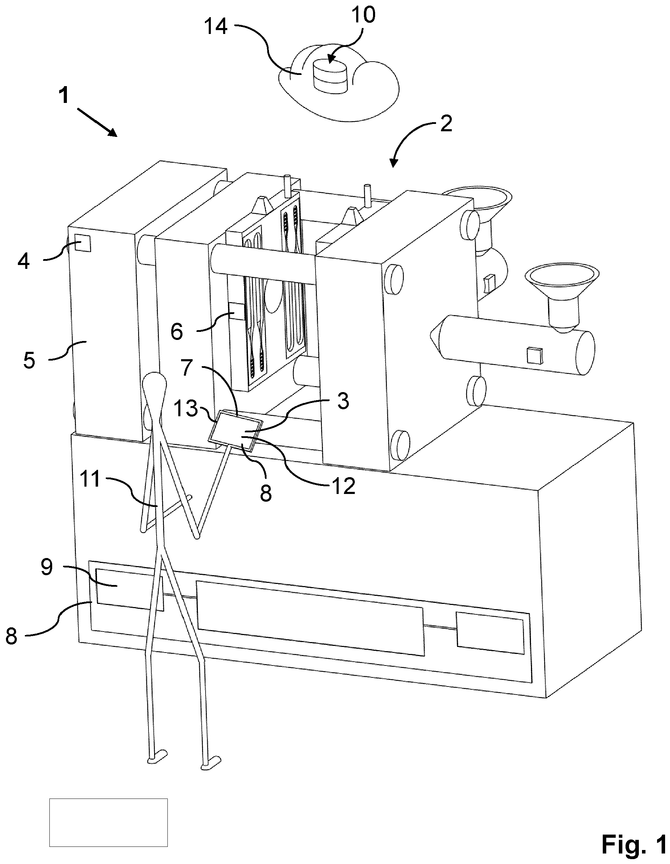

Figur 1 zeigt eine im Ganzen mit 1 bezeichnete Spritzgießmaschine. Die Spritzgießmaschine 1 weist als eine ihrer Funktionseinheiten eine Spritzgießform 2 auf. Die Spritzgießmaschine 1 umfasst ferner ein augmented-reality-Darstellungsgerät 3, das hier als Tablet-Computer vorliegt.

Die Spritzgießmaschine 1 trägt ein erstes Identifikationsmerkmal 4 in Form eines QR-Codes. Das erste Identifikationsmerkmal 4 ist an einem Ständer 5 der Spritzgießmaschine 1 angeordnet. Die Funktionseinheit 2 ist mit einem zweiten Identifikationsmerkmal 6 ausgestattet, das ebenfalls ein QR-Code ist.

Das augmented-reality-Darstellungsgerät 3 umfasst zumindest eine Kamera 7, mit der es ein Bild der Spritzgießmaschine 1 wie auch der Funktionseinheit 2, hier der Spritzgießform 2 aufnehmen kann. Das augmented-reality-Darstellungsgerät 3 ist zum Auslesen des ersten Identifikationsmerkmals 4 der Spritzgießmaschine 1 und des zweiten Identifikationsmerkmals 6 der Funktionseinheit 2 eingerichtet. Ferner kann das augmented-reality-Darstellungsgerät 3 auch mit einem Mikrofon ausgestattet sein.

Über eine Drahtlosschnittstelle 8 ist das augmented-reality-Darstellungsgerät 3 mit einer Regeleinheit 9 der Spritzgießmaschine 1 verbunden. So kann die Spritzgießmaschine 1 mithilfe des augmented-reality-Darstellungsgerät 3 drahtlos bedient werden, beispielsweise indem Prozessparameter der Spritzgießmaschine 1 zur Einrichtung, Wartung und/oder Instandsetzung oder auch nur zum Betrieb der Spritzgießmaschine 1 an dem augmented-reality-Darstellungsgerät 3 verändert werden.

Die Spritzgießmaschine 1 ist zumindest zeitweise mit einer Datenbank 10 verbunden. Mit dieser Datenbank 10 können sowohl die bereits zuvor erwähnte Regeleinheit 9 der Spritzgießmaschine 1 wie auch das augmented-reality-Darstellungsgerät 3 kommunizieren. Zu diesem Zweck ist auch die Regeleinheit 9 mit einer Datenschnittstelle, beispielsweise mit einer Drahtlosschnittstelle 8, ausgerüstet. Die Datenbank 10 des in der Figur dargestellten Ausführungsbeispiels der Spritzgießmaschine 1 ist in einem netzwerkbasierten Speicher 14, nämlich in einer Cloud realisiert, auf die die Regeleinheit 9 der Spritzgießmaschine 1 sowie das augmented-reality-Darstellungsgerät 3 über ein Netzwerk zugreifen können.

Das augmented-reality-Darstellungsgerät 3 ist dazu eingerichtet, Informationen, die sich auf die Spritzgießmaschine 1 und/oder die zumindest eine Funktionseinheit 2 beziehen, autonom und/oder automatisch aus der Datenbank 10 auszulesen und auszugeben. Ferner ist das augmented-reality-Darstellungsgerät 3 dazu eingerichtet, Informationen bezüglich eines erfolgreichen Betriebs, einer erfolgreichen Einrichtung, Instandsetzung und/oder Wartung der Spritzgießmaschine 1 und/oder der zumindest einen Funktionseinheit 2 autonom und/oder automatisch in der Datenbank 10 zu hinterlegen

Zur Durchführung eines Fernbetriebs, einer Ferneinrichtung, einer Fernwartung und/oder einer Ferninstandsetzung der Spritzgießmaschine 1 kann der Spritzgießmaschine 1 und/oder ihrer Funktionseinheit 2 zumindest zeitweise eine weitere Anzeigevorrichtung, die in den Figuren nicht gesondert dargestellt ist, zugeordnet sein. Diese weitere Anzeigevorrichtung, beispielsweise ein Tablet-Computer, kann zumindest zeitweise über ein Netzwerk mit der Regeleinheiten 9 der Spritzgießmaschine 1 und/oder mit dem augmented-reality-Darstellungsgerät 3 verbunden sein.

Die zuvor beschriebene und in der Figur dargestellte Spritzgießmaschine 1 ist zu dem nachfolgend näher erläuterten Verfahren zum Betrieb, insbesondere zur Einrichtung, Instandsetzung und/oder Wartung der Spritzgießmaschine 1 eingerichtet.

Dabei ist vorgesehen, dass die Spritzgießmaschine 1 anhand des ersten maschinenlesbaren Identifikationsmerkmals 4 und zumindest eine der Spritzgießmaschinen 1 zuzuordnende und/oder zugeordnete Funktionseinheit 2, hier die Spritzgießform 2 der Spritzgießmaschine 1, anhand des zweiten maschinenlesbaren Identifikationsmerkmals 6 mithilfe des augmented-reality-Darstellungsgerät 3 identifiziert werden.

Nach erfolgter Identifikation wird zumindest eine Information von dem augmented-reality-Darstellungsgerät 3 ausgegeben, die sich auf die identifizierte Spritzgießmaschine 1 und/oder die zumindest eine identifizierte Funktionseinheit 2 bezieht.

So kann anhand von in der Datenbank 10 hinterlegten Daten wird geprüft werden, ob die Spritzgießmaschine 1 und die zumindest eine Funktionseinheit 2 kompatibel zueinander sind. Diese Prüfung wird insbesondere bei einer Erstinbetriebnahme der Funktionseinheit 2, also hier der Spritzgießform 2, an der Spritzgießmaschine 1 vorgenommen. Ein Ergebnis dieser Prüfung wird von dem augmented-reality-Darstellungsgerät 3 an den Anwender 11 der Spritzgießmaschine 1 als Information ausgegeben.

Die Informationsausgabe kann über ein Display 12 und/oder einen Lautsprecher 13 des augmented-reality-Darstellungsgeräts 3 erfolgen.

Bei dem Verfahren ist ferner vorgesehen, bei Bedarf historische Nutzungsdaten der Funktionseinheit 2 aus der Datenbank auszulesen und über das augmented-reality-Darstellungsgerät 3 als Information für einen Anwender 11 auszugeben. Die historische Nutzungsdaten der Funktionseinheit 2 können, insbesondere von der Regeleinheit 9 der Spritzgießmaschine 1, bei dem Betrieb, der Einrichtung, der Instandsetzung und/oder Wartung der Spritzgießmaschine 1 und der zumindest einen Funktionseinheit 2 der Spritzgießmaschine 1 berücksichtigt werden.

Bei einer Ausführungsform des Verfahrens werden historische Nutzungsdaten der Funktionseinheit 2 aus der Datenbank ausgelesen. Dann erfolgt eine Prüfung der ausgelesenen historischen Nutzungsdaten der Funktionseinheit 2. Diese Prüfung kann mithilfe des augmented-reality-Darstellungsgeräts 3 und/oder mithilfe der Regeleinheit 9 erfolgen. Vergangene Einrichtungsvorgänge repräsentierende Einrichtungsinformationen, wie zum Beispiel Einrichtungsparameter, werden aus der Datenbank ausgelesen und als Information für den Anwender 11 über das augmented-reality-Darstellungsgerät 3 ausgegeben. Dies zum Beispiel dann, wenn die Prüfung der historischen Nutzungsdaten der Funktionseinheit 2 ergibt, dass die Funktionseinheit 2 oder eine baugleiche Funktionseinheit 2 bereits zuvor mit der Spritzgießmaschine 1 oder einer baugleichen Spritzgießmaschine 1 verwendet wurde.

Sofern keine historischen Nutzungsdaten der Funktionseinheit 2 oder einer baugleichen Funktionseinheit 2 aus der Datenbank 10 ausgelesen werden konnten, liegt der Fall einer Ersteinrichtung der Funktionseinheit 2 an der Spritzgießmaschine 1 vor. Wenn die Prüfung der historischen Nutzungsdaten der Funktionseinheit 2 also ergibt, dass die Funktionseinheit 2 oder eine baugleiche Funktionseinheit 2 bisher noch nicht mit der Spritzgießmaschine 1 oder einer baugleichen Spritzgießmaschine 1 verwendet wurde, werden die bei der Ersteinrichtung der Funktionseinheit 2 an der Spritzgießmaschine 1 definierten Einrichtungsschritte und/oder Einrichtungsparameter in der Datenbank 10 als Einrichtungsinformationen hinterlegt. Dort stehen die Einrichtungsparameter der vorgenommenen Ersteinrichtung dann für nachfolgende Einrichtungsvorgänge der Funktionseinheit 2 oder einer baugleichen Funktionseinheit 2 an der Spritzgießmaschine 1 oder einer baugleichen Spritzgießmaschine 1 als Einrichtungsinformationen für Anwender zur Verfügung.

Im Instandsetzungsfall, also dann, wenn die Spritzgießmaschine 1 oder die Funktionseinheit 2 ungeplant ausfallen, können anhand des ersten und/oder des zweiten Identifikationsmerkmals 4, 6 Instandsetzungsinformationen, insbesondere ein Konstruktionsplan, der Spritzgießmaschine 1 und/oder der Funktionseinheit 2 aus der Datenbank 10 ausgelesen und als Informationen für den Anwender von dem augmented-reality-Darstellungsgerät 3 ausgegeben werden.

Bei einer erfolgreichen Instandsetzung der Spritzgießmaschine 1 und/oder der Funktionseinheit 2 vorgenommene Maßnahmen, also Einstellungen, Reparaturen oder dergleichen, können für zukünftige Instandsetzungsfälle bei baugleichen Spritzgießmaschine 1 und/oder Funktionseinheiten 2 als Instandsetzungsinformationen in der Datenbank 10 hinterlegt werden. Dies kann mithilfe der Regeleinheit 9 der Spritzgießmaschine 1 und/oder mithilfe des augmented-reality-Darstellungsgeräts 3 erfolgen.

Das augmented-reality-Darstellungsgerät 3 kann ferner ein Ersatzteil bestellen, wenn an der Spritzgießmaschine 1 und/oder der Funktionseinheit 2 ein Defekt festgestellt wurde. Die Bestellung eines erforderlichen Ersatzteiles kann dabei automatisch oder autonom von dem augmented-reality-Darstellungsgerät 3 und/oder auch von der Regeleinheit 9 der Spritzgießmaschine vorgenommen werden.

Sobald eine Wartung der Spritzgießmaschine 1 und/oder der Funktionseinheit 2 ansteht, kann von dem augmented-reality-Darstellungsgerät 3 eine entsprechende Information ausgegeben und dafür erforderliche Maßnahmen eingeleitet werden. Das augmented-reality-Darstellungsgerät 3 kann beispielsweise für die Wartung erforderliches Material, vorzugsweise Verbrauchsmaterial, Ersatzmaterial, und/oder Ersatzteile zumindest mittelbar bestellen. Eine Bestellung der für die Wartung erforderlichen Materialien kann auch von der Spritzgießmaschine 1, insbesondere von ihrer Regeleinheit 9, vorzugsweise autonom, ausgelöst werden.

Im Wartungsfall ist es ferner möglich, anhand des ersten und/oder zweiten Identifikationsmerkmals 4, 6 eine Wartungsinformation, beispielsweise ein Konstruktionsplan, der Spritzgießmaschine 1 und/oder der Funktionseinheit 2 aus der Datenbank 10 auszulesen. Die Wartungsinformation kann dann von dem augmented-reality-Darstellungsgerät 3 ausgegeben werden.

Das augmented-reality-Darstellungsgerät 3 ist dazu in der Lage, ein Bild der Spritzgießmaschine 1 und/oder der zumindest einen Funktionseinheit 2 aufzunehmen und eine Darstellung auszugeben, die dieses Bild durch, insbesondere aus der Datenbank 10 ausgelesene Informationen, Daten und/oder Parameter ergänzt. Dies erleichtert dem Benutzer 11 den Betrieb, die Einrichtung, Instandsetzung und/oder Wartung der Spritzgießmaschine 1 bzw. ihrer Funktionseinheit 2.

Die zuvor erwähnte Darstellung kann im Bedarfsfall auch an eine weitere, in der Zeichnung nicht näher dargestellte Anzeigevorrichtung übertragen werden. Über die weitere Anzeigevorrichtung ist dann eine Ferneinrichtung, Fernwartung und/oder Ferninstandsetzung sowie ein Fernbetrieb der Spritzgießmaschine 1 und der Funktionseinheit 2 möglich.

Wie bereits zuvor erwähnt wurde, dient als erstes Identifikationsmerkmals 4 ein QR-Code, der an dem Ständer 5 der Spritzgießmaschine 1 angebracht ist. Als zweites Identifikationsmerkmal 6, mithilfe dessen die Funktionseinheit 2, nämlich die Spritzgießform 2 der Spritzgießmaschine 1, identifiziert werden kann, dient ebenfalls ein QR-Code. Die zuvor erwähnte Datenbank 10 ist in einem netzwerkbasierten Streicher, hier einer Cloud realisiert. Neben dem in der Figur gezeigten Tablet-Computer, der als augmented-reality-Darstellungsgerät 3 verwendet wird, ist es auch möglich, als augmented-reality-Darstellungsgerät 3 ein Smartphone und/oder eine Datenbrille, wie beispielsweise eine AR-Brille und/oder eine VR-Brille zu verwenden.

Der Speicher 14 ist ein computerlesbares Medium, auf dem ein Computerprogramm gespeichert ist. Das Computerprogramm umfasst Befehle, die bewirken, dass die Spritzgießmaschine 1 und insbesondere das augmented-reality-Darstellungsgerät 3, das zuvor beschriebene Verfahren auszuführen.

Die Erfindung befasst sich mit Verbesserungen auf dem technischen Gebiet der Spritzgießmaschinen 1. Hierzu wird unter anderem die Spritzgießmaschine 1 mit ihrer zumindest einen Funktionseinheit 2 vorgeschlagen. Die Spritzgießmaschine 1 umfasst wenigstens ein augmented-reality-Darstellungsgerät 3, das die Bedienung, den Betrieb, die Einrichtung, die Instandsetzung und/oder Wartung der Spritzgießmaschine 1 vereinfacht.

### Bezugszeichenliste

- 1: Spritzgießmaschine
- 2: Funktionseinheit/Spritzgießform
- 3: augmented-reality-Darstellungsgerät
- 4: erstes Identifikationsmerkmal/QR-Code
- 5: Ständer
- 6: zweites Identifikationsmerkmal/QR-Code
- 7: Kamera
- 8: Drahtlosschnittstelle
- 9: Regeleinheit
- 10: Datenbank
- 11: Benutzer
- 12: Display an 3
- 13: Lautsprecher an 3
- 14: Speicher/Cloud

## Patentansprüche

1. Verfahren zum Betrieb, insbesondere zur Einrichtung, Instandsetzung und/oder Wartung, einer Spritzgießmaschine (1), wobei die Spritzgießmaschine (1) anhand eines, insbesondere ersten, maschinenlesbaren Identifikationsmerkmals (4) und/oder zumindest eine der Spritzgießmaschine (1) zuzuordnenden und/oder zugeordneten Funktionseinheit (2) anhand eines, insbesondere weiteren oder zweiten, maschinenlesbaren Identifikationsmerkmals (6) identifiziert wird/werden, wonach zumindest eine Information, die sich auf die identifizierte Spritzgießmaschine (1) und/oder die zumindest eine identifizierte Funktionseinheit (2) bezieht, von einem augmented-reality-Darstellungsgerät (3) ausgegeben wird, das der Spritzgießmaschine (1) zumindest zeitweise zugeordnet ist.

2. Verfahren nach Anspruch 1, wobei das Identifikationsmerkmal (4) der Spritzgießmaschine (1) und/oder das Identifikationsmerkmal (6) der Funktionseinheit (2) von dem augmented-reality-Darstellungsgerät (3) ausgelesen wird/werden, und/oder wobei geprüft wird, ob die Spritzgießmaschine (1) und die zumindest eine Funktionseinheit (2) kompatibel zueinander sind, insbesondere wobei ein Ergebnis dieser Prüfung von dem augmented-reality-Darstellungsgerät (3) als Information ausgegeben wird.

3. Verfahren nach Anspruch 1 oder 2, wobei historische Nutzungsdaten der Funktionseinheit (2) als Information von dem augmented-reality-Darstellungsgerät (3) ausgegeben werden, insbesondere wobei die historischen Nutzungsdaten der Funktionseinheit (2) aus einer oder der Datenbank (10) ausgelesen und/oder geprüft werden.

4. Verfahren nach einem der Ansprüche 1 bis 3, wobei historische Nutzungsdaten der Funktionseinheit (2) und/oder einer baugleichen Funktionseinheit (2) geprüft, insbesondere aus einer oder der Datenbank (10) ausgelesen werden, wobei zumindest eine vergangene Einrichtungsvorgänge repräsentierende Einrichtungsinformation als Information von dem augmented-reality-Darstellungsgerät (3) ausgegeben wird, wenn eine Prüfung der historischen Nutzungsdaten der Funktionseinheit (2) ergibt, dass die Funktionseinheit (2) oder eine baugleiche Funktionseinheit (2) bereits zuvor mit der Spritzgießmaschine (1) oder einer baugleichen Spritzgießmaschine (1) verwendet wurde und/oder wobei zumindest eine Einrichtungsinformation einer Ersteinrichtung in einer oder der Datenbank (10) hinterlegt wird, wenn eine Prüfung der historischen Nutzungsdaten der Funktionseinheit (2) ergibt, dass die Funktionseinheit (2) oder eine baugleiche Funktionseinheit (2) bisher noch nicht mit der Spritzgießmaschine (1) oder einer baugleichen Spritzgießmaschine (1) verwendet wurde.

5. Verfahren nach einem der vorherigen Ansprüche, wobei, insbesondere im Instandsetzungsfall, anhand des ersten und/oder zweiten Identifikationsmerkmals (4,6) zumindest eine Instandsetzungsinformation, insbesondere ein Konstruktionsplan, der Spritzgießmaschine (1) und/oder der Funktionseinheit (2) als Information von dem augmented-reality-Darstellungsgerät (3) ausgegeben wird.

6. Verfahren nach einem der vorherigen Ansprüche, wobei zur Instandsetzung der Spritzgießmaschine (1) und/oder der Funktionseinheit (2) vorgenommene Maßnahmen für zukünftige Instandsetzungsfälle bei baugleichen Spritzgießmaschinen (1) und/oder Funktionseinheiten (2) als Instandsetzungsinformation in einer oder der Datenbank (10) hinterlegt werden.

7. Verfahren nach einem der vorherigen Ansprüche, wobei ein Ersatzteil zumindest mittelbar automatisch von dem augmented-reality-Darstellungsgerät (3) bestellt wird, wenn an der Spritzgießmaschine (1) und/oder der Funktionseinheit (2) ein Defekt festgestellt wurde.

8. Verfahren nach einem der vorherigen Ansprüche, wobei eine anstehende Wartung der Spritzgießmaschine (1) und/oder der Funktionseinheit (2) über das augmented-reality-Darstellungsgerät (3) angezeigt und/oder dafür erforderliche Maßnahmen eingeleitet wird/werden, insbesondere dafür erforderliches Material, vorzugsweise Verbrauchsmaterial, Ersatzmaterial, und/oder Ersatzteile bestellt werden.

9. Verfahren nach einem der vorherigen Ansprüche, wobei im Wartungsfall anhand des ersten und/oder zweiten Identifikationsmerkmals (4,6) zumindest eine Wartungsinformation, insbesondere ein Konstruktionsplan, der Spritzgießmaschine (1) und/oder der Funktionseinheit (2) als Information von dem augmented-reality-Darstellungsgerät (3) ausgegeben wird.

10. Verfahren nach einem der vorherigen Ansprüche, wobei das augmented-reality-Darstellungsgerät (3) ein Bild der Spritzgießmaschine (1) und/oder der Funktionseinheit (2) aufnimmt und als Information eine Darstellung ausgibt, die dieses Bild durch, insbesondere aus einer oder der Datenbank (10) ausgelesene, Informationen, Daten und/oder Parameter ergänzt.

11. Verfahren nach Anspruch 10, wobei die Darstellung an zumindest eine weitere Anzeigevorrichtung zur Ferneinrichtung, Fernwartung und/oder Ferninstandsetzung der Spritzgießmaschine (1) und/oder der Funktionseinheit (2) übertragen wird.

12. Verfahren nach einem der vorherigen Ansprüche, wobei als erstes Identifikationsmerkmal (4) und/oder als zweites Identifikationsmerkmal (6) jeweils ein maschinenlesbarer Code verwendet wird.

13. Verfahren nach einem der vorherigen Ansprüche, wobei als Datenbank (10) ein netzwerkbasierter Speicher, insbesondere eine Cloud, verwendet wird, und/oder wobei die zumindest eine Funktionseinheit (2) eine Spritzgießform ist, und/oder wobei als augmented-reality-Darstellungsgerät (3) ein Tablet-Computer, ein Smartphone und/oder eine Datenbrille, insbesondere eine AR- und/oder VR-Brille verwendet werden.

14. Spritzgießmaschine (1) mit zumindest einer Funktionseinheit (2) und mit wenigstens einem zumindest zeitweise der Spritzgießmaschine (1) zugeordneten augmented-reality-Darstellungsgerät (3), wobei die Spritzgießmaschine (1) ein, insbesondere erstes, maschinenlesbares Identifikationsmerkmal (4) und/oder die Funktionseinheit (2) ein, insbesondere weiteres oder zweites, maschinenlesbares Identifikationsmerkmal (6) aufweist/aufweisen, und wobei die Spritzgießmaschine (1) zur Durchführung des Verfahrens nach einem der vorherigen Ansprüche eingerichtet ist.

15. Spritzgießmaschine (1) nach Anspruch 14, wobei das augmented-reality-Darstellungsgerät (3) zum Auslesen des Identifikationsmerkmals (4) der Spritzgießmaschine (1) und/oder des Identifikationsmerkmals (6) der Funktionseinheit (2) eingerichtet ist und/oder wobei die Spritzgießmaschine (1) als Funktionseinheit (2) eine Spritzgießform und/oder als augmented-reality-Darstellungsgerät (3) ein Tablet-Computer, ein Smartphone und/oder eine Datenbrille, insbesondere eine AR- und/oder VR-Brille.

16. Spritzgießmaschine (1) nach Anspruch 14 oder 15, wobei das augmented-reality-Darstellungsgerät (3) dazu eingerichtet ist, Informationen, die sich auf die Spritzgießmaschine (1) und/oder die zumindest eine Funktionseinheit (2) beziehen, autonom und/oder automatisch aus einer oder der Datenbank (10) auszulesen, und/oder wobei das augmented-reality-Darstellungsgerät (3) dazu eingerichtet ist, Informationen bezüglich eines erfolgreichen Betriebs, einer erfolgreichen Einrichtung, Instandsetzung und/oder Wartung der Spritzgießmaschine (1) und/oder der zumindest einen Funktionseinheit (2) autonom und/oder automatisch in einer oder der Datenbank (10) zu hinterlegen, und/oder wobei das augmented-reality-Darstellungsgerät (3) zumindest eine Kamera (7) und/oder zumindest ein Mikrofon umfasst.

17. Spritzgießmaschine (1) nach einem der vorherigen Ansprüche, wobei die Spritzgießmaschine (1) zumindest zeitweise eine Datenbank (10), insbesondere einen netzwerkbasierten Speicher (14) mit der Datenbank (10), vorzugsweise eine Cloud aufweist, und/oder mit einem solchen/einer solchen, verbunden ist, und/oder wobei die Spritzgießmaschine (1) zur Ferneinrichtung, Fernwartung und/oder Ferninstandsetzung der Spritzgießmaschine (1) und/oder der Funktionseinheit (2) zumindest zeitweise eine weitere Anzeigevorrichtung aufweist, die zumindest zeitweise über ein Netzwerk mit einer Regeleinheit (9) der Spritzgießmaschine (1) und/oder mit dem augmented-reality-Darstellungsgerät (3) verbunden ist.

18. Computerprogramm, umfassend Befehle, die bewirken, dass die Spritzgießmaschine (1) nach einem der Ansprüche 14 bis 17, die Verfahrensschritte nach einem der Ansprüche 1 bis 13 ausführt

19. Computerlesbares Medium (14), auf dem das Computerprogramm nach Anspruch 18 gespeichert ist.
